# EUROPEAN PATENT SPECIFICATION

(11) **EP 3 282 207 B1**
(45) Date of publication and mention of the grant of the patent: **28.12.2022**
(21) Application number: 17184833.6
(22) Date of filing: 04.08.2017
(51) Int. Cl.: F24S 60/30, F24S 10/75, F24S 90/10, F24S 10/30

(54) **IMPROVED NATURAL CIRCULATION SYSTEM INTEGRATED WITHIN A SOLAR COLLECTOR AND ASSEMBLY COMPRISING A PLURALITY OF NATURAL CIRCULATION SYSTEMS PROVIDED INSIDE SAID SOLAR COLLECTOR**
VERBESSERTE NATÜRLICHE KREISLAUFSYSTEME INTEGRIERT IN EINEM SOLAREN SAMMLER UND ZUSAMMENBAU MIT EINER PLURALITÄT VON NATÜRLICHEN KREISLAUFSYSTEMEN, DIE INNERHALB DES SOLAREN SAMMLERS VORGESEHEN SIND
SYSTÈME DE CIRCULATION NATURELLE AMÉLIORÉ INTÉGRÉ DANS UN COLLECTEUR SOLAIRE ET ASSEMBLAGE COMPRENANT UNE PLURALITÉ DE SYSTÈMES DE CIRCULATION NATURELLE FOURNIS À L'INTÉRIEUR DE CE COLLECTEUR SOLAIRE

(30) Priority: 10.08.2016 IT 201600084082
(43) Date of publication of application: 14.02.2018
(73) Proprietor: Cordivari S.r.l., 64020 Morro D'Oro (TE) (IT)
(72) Inventor: DI GIANNATALE, Daniele, 64020 Morro d'Oro (TE) (IT); CORDIVARI, Ercole, 64020 Morro d'Oro (TE) (IT)
(74) Representative: Santi, Filippo

(56) References cited:
- EP-A1- 2 369 261
- EP-A1- 2 746 692
- EP-A1- 2 924 364
- WO-A1-2008/060167

## Description

The present invention relates to an improved integrated natural circulation system integrated within a solar collector, and a to an assembly comprising a plurality of natural circulation systems contained within said solar collector.

More specifically, the invention relates to a system of the above type, fully integrated within a solar collector, having a surface area typical of a solar collector and a reduced thickness, with the storage tank contained within the solar collector, and therefore not visible and not hidden on the back of the collector.

The solar collector provided with the natural circulation system according to the invention, although it contains all the system inside it, is extremely compact.

By the solution according to the invention it is also possible realizing an assembly comprising a plurality of solar collectors, with no visible tanks, which is extremely compact.

As it is well known, a solar system according to the prior art provides an absorber consisting of a copper plate, or of other thermally conductive material, with welded ducts, which captures solar energy and transfers it to a primary heat transfer fluid, usually water and glycol, flowing in said ducts.

A secondary fluid, mainly sanitary water, is contained within a storage tank provided with an exchanger inside which said primary fluid flows and transfers the heat to the secondary fluid.

There are also known natural circulation systems, the principle of operation of which provides for a primary heat transfer fluid flowing between an absorber and a storage tank inside which heat exchange takes place, without circulation means, such as pumps, but thanks to the natural tendency of a hot fluid to rise.

Examples of such natural circulation systems are described in international application n. WO 2008/060167 A1 and in document EP 2 369 261 A1.

This type of natural circulation systems, although having positive characteristics, such as the operation without the need for other energy sources, apart from solar irradiation, has different drawbacks.

Particularly, said known natural circulation systems provide a storage tank outside the solar collector, which has a remarkable aesthetic impact, as well as a possible impact on places where environmental/landscape constraints are present.

Further, the installer must mount both the collector and the tank and properly connect both the secondary water circuit and the primary glycol circuit, since natural circulation only occurs if it is properly assembled.

Prior art document EP 2 369 261 A1 describes a similar natural circulation system, whereby the storage tank and the absorber are separated and arranged side-by-side, but wherein the aesthetic impact of the storage tank has been reduced by splitting the storage tank in a plurality of vessels arranged side-by-side. However, such solution has the drawback of increasing the encumbrance area of the collector.

A progress made in the technology of natural circulation collectors consists in natural circulation collectors with a reservoir hidden behind the collector. This solution has good features of compactness and ease of installation (in fact, only the insertion of the secondary circuit is required, being the primary circuit one integrated) but is not completely free from drawbacks. Particularly, this is limited to the fact that it is possible installing these collectors only on horizontal planar surfaces, using structures keeping the collector in an inclined position, poor aesthetic performance, and the possibility of a reverse circulation overnight, resulting in heat dispersion.

A further technique known in the art consists of direct irradiation solar collectors, which do not provide a primary fluid, since accumulated water is directly exposed to solar irradiation.

In this case no absorber, heat exchanger and transfer ducts are provided, so that the structure is simplified with respect to solar systems and other types of natural circulation systems.

In addition, direct irradiation solar collectors can also be installed on roofs, with good aesthetic performance and low landscape impact.

However, even this type of solution is not free from drawbacks, such as modest yields, high heat dispersion due to direct exposure to the outside of the accumulation which is at least partially not insulated, and the risk of breakage due to the formation of ice within the same accumulation.

Just in view of said problem, it is necessary mounting an electrical resistance connected to a thermostat that, if the outside temperature drops, warms up the water in order to avoid ice formation and failure of the collector.

EP 2 746 692 and EP 2 924 364 describe a solar system with built-in accumulation, provided within a box-like structure enclosed by a top transparent cover below which it is placed a sheet of material suitable for absorbing solar radiation.

Below the absorbing plate it is provided a reservoir for storage of a secondary fluid.

In the solution described in the two European patents, the heat exchange occurs through a heat exchanger positioned inside the secondary accumulated ducts.

A main feature of said systems is the position of the absorber, which is located exactly above the accumulation. Under certain conditions of installation and/or operation, the natural circulation of the fluid may be difficult because the hot fluid, having a lower density, is forced to perform an unnatural path, as it should proceed downwards, thus against the force of gravity, in order to enter the heat exchanger.

In view of the above, the applicant has realized and developed an innovative natural circulation system for solar collectors that overcome the drawbacks of known solutions.

These and other results are obtained according to the invention by suggesting a natural circulation system for a solar collector having the accumulation and heat exchange elements integrated within the solar collector itself, thus obtaining an extremely compact structure and substantially overcoming the above mentioned drawbacks typical of the known solutions.

It is therefore specific object of the present invention a natural circulation solar system for solar collector, said solar collector providing a box-like containment structure, closed above by a transparent surface, and further providing inside upper absorbing means, for the exposure to the solar radiation, arranged inferiorly with respect to said transparent surface and superimposed on a series of ducts of an independent accumulation primary circuit for the natural circulation therein of a primary heat carrier fluid, on at least one secondary accumulation duct of a secondary circuit for the circulation of a secondary fluid, and on at least one heat exchanger for the exchange of heat between said primary heat carrier fluid and said secondary fluid, said secondary circuit comprising at least an inlet opening and at least an outlet opening of said secondary fluid, said openings being reachable from the outside with respect to said box-like containment structure, wherein said series of ducts of the primary circuit comprise at least a first portion, thermally connected to said upper absorbing means, and at least a second portion thermally connected to said at least one secondary duct, in correspondence with said at least one heat exchanger, wherein at least one layer of insulating material is provided between said series of ducts of said primary circuit and said at least one secondary duct of said secondary fluid thermally insulating said secondary ducts and said at least one heat exchanger and able to limit the thermal dispersion of the upper absorbing means, and wherein, when said primary heat carrier fluid flows by natural circulation in said series of primary ducts of said primary circuit, said primary heat carrier fluid and said secondary fluid circulate in countercurrent in said heat exchanger, said natural circulation solar system being characterized in that said first portion, arranged in correspondence of said upper absorbing means, is provided shifted along the horizontal plane with respect to said second portion, arranged in correspondence of the secondary accumulation circuit, so that, during use, when the upper absorbing means are exposed to solar irradiation and when said system is inclined and said first portion is in a lower position with respect to the second portion, natural circulation of the primary heat-carrier fluid is activated, wherein the fluid, heating in correspondence of the first portion, decreases in density and tends to rise in correspondence of the second portion, not exposed to solar irradiation, wherein the fluid, cooling, increases in density and tends to fall down returning to the first portion.

Preferably, according to the invention, said upper absorbing means can be comprised of a single upper absorbing means or by a series of strips of absorbing means.

Still according to the invention, said at least one layer of insulating material can completely surround said series of secondary ducts.

Further, according to the invention, said upper absorbing means can be made up of thermally conductive material, preferably copper or aluminium.

Particularly, according to the invention, said secondary accumulation circuit provides a plurality of accumulation vessels for the secondary fluid and for passage of the same, preferably tanks, ducts, rooms and like, and hydraulic connection means between said accumulation vessels.

In an embodiment of the system according to the invention, said at least one secondary conduit can comprise a single storage tank of the secondary fluid and for the passage of the same.

Furthermore, according to the invention, said second portion of said series of ducts of said primary circuit can be inserted, at least partially, in said series of secondary ducts.

Stll according to the invention, said primary circuit of the heat carrier fluid can provide an integrated expansion system.

Particularly, according to the invention, said integrated expansion system can provide a series of connections located in the highest part of the primary circuit, so as to allow any air bubbles present inside said circuit primary to be conveyed into the expansion system.

Preferably, ducts of the expansion connection circuit can have a reduced passage with respect to the primary circuit section, so that the natural circulation of heat carrier fluid is not disturbed.

It is to be noted that such an expansion system does not take part in the natural circulation of the primary fluid, but it has the sole task of connecting the various branches of the primary circuit with the expansion vessel in order to uniformize the pressure inside the same.

In a further embodiment of the systema according to the invention, it can be also provided a further exchange between the secondary fluid and the sanitary circuit, in this case the secondary storage being a technical fluid accumulation in which is immersed a heat exchanger extracting heat from the said secondary storage to yield it to the domestic water.

It is further a specific object of the present invention an assembly of solar collectors, connected in series and/or in parallel, comprising a plurality of collectors as described in the above.

The present invention will now be described, for illustrative, but not limitative purposes, according to its preferred embodiments, with particular reference to the figures of the enclosed drawings, wherein:
figure 1 is a first exploded view of a natural circulation system according to the invention;
figure 2 is a second exploded view of the system of figure 1;
figure 3 is a third exploded view of the system of figure 1;
figure 4 is a first perspective exploded view of the components of the primary fluid fluid circuits and of the secondary fluid of the system of figures 1 and 2;
figure 5 is a second perspective exploded view of the primary circuit heat transfer fluid and of the secondary fluid components of the system of figures 1 and 2;
figure 6 is a third perspective exploded view of the primary circuit heat transfer fluid circuit and of the secondary fluid components of the system of figures 1 and 2;
figure 7 is a fourth perspective exploded view of the components of the primary heat transfer fluid and of the secondary fluid circuits of the system of figures 1 and 2;
figure 8 is an exploded side view of the accumulator-absorber assembly of the natural circulation system for a solar collector according to the invention wherein the primary and secondary circuits are shown;
figure 9 is an exploded side view of the accumulator-absorber assembly of the natural circulation system for a solar collector according to the invention;
figure 10 is an exploded side view of the accumulator-absorber assembly of the natural circulation system for a solar collector according to the invention in which the primary circuit is shown.

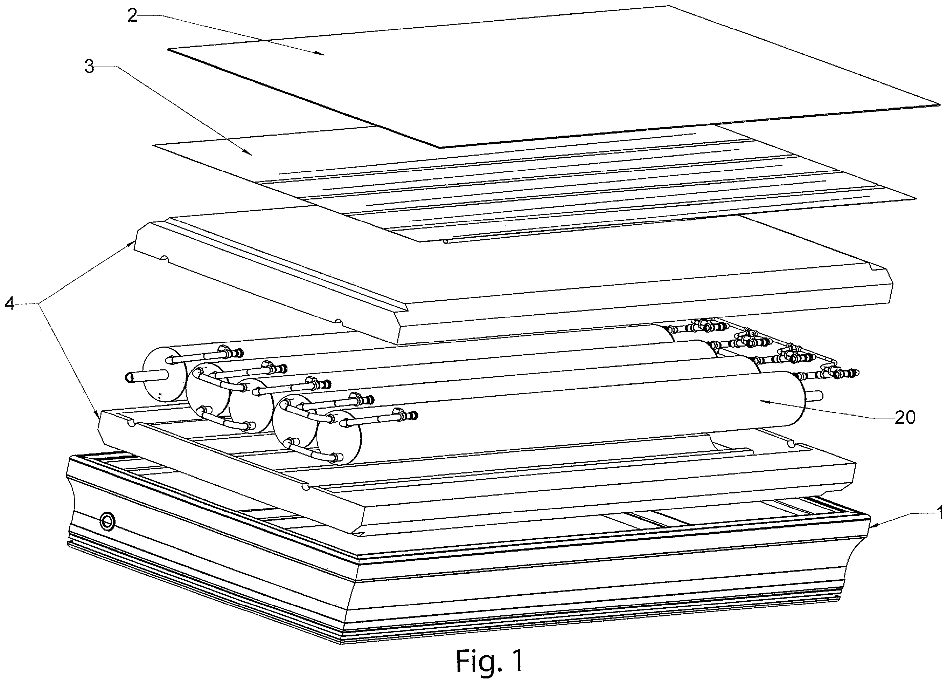

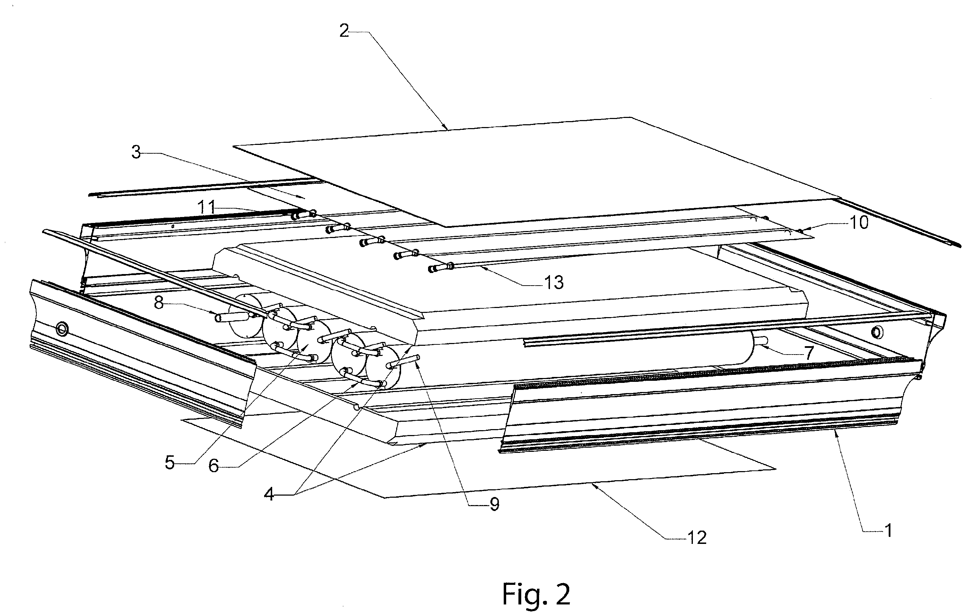

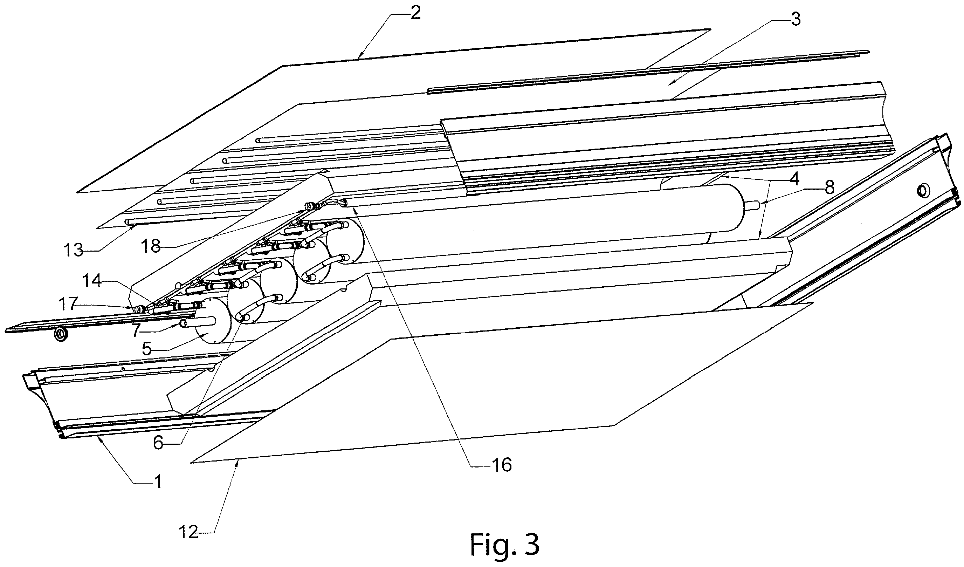

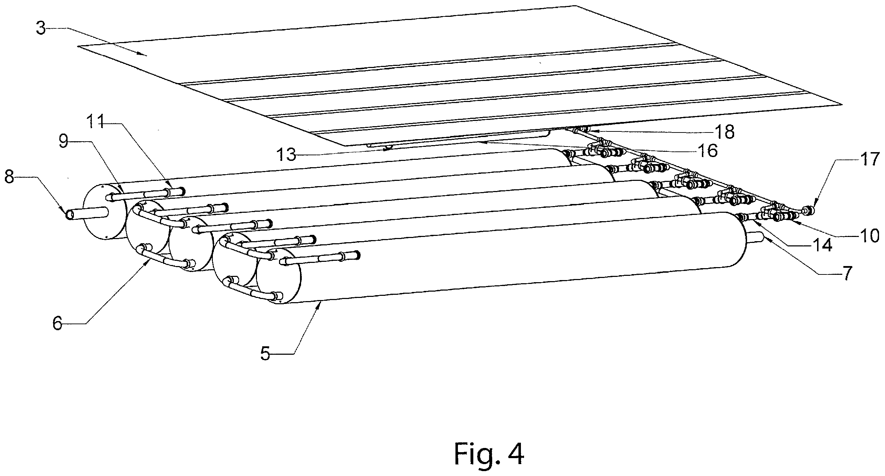

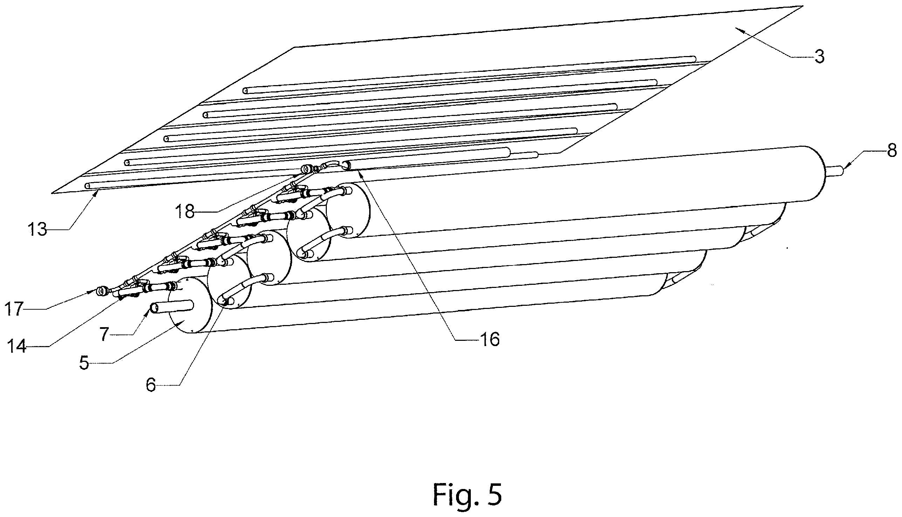

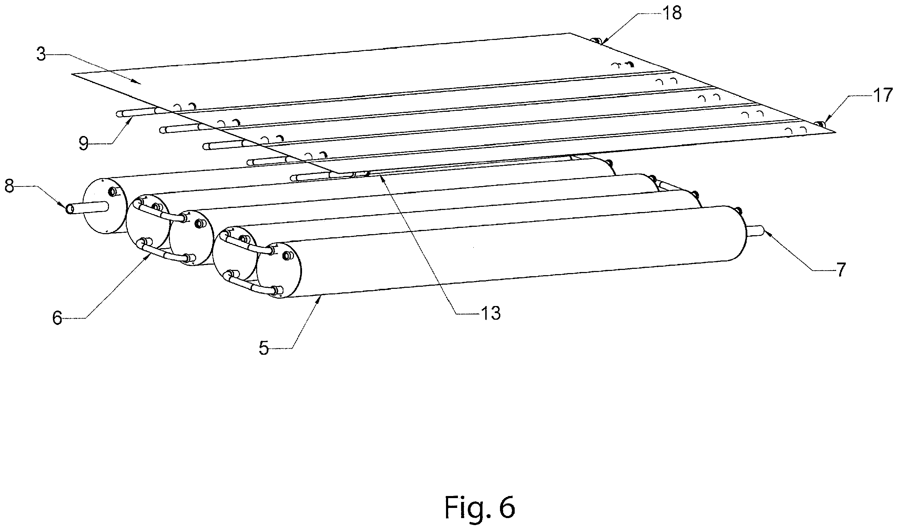

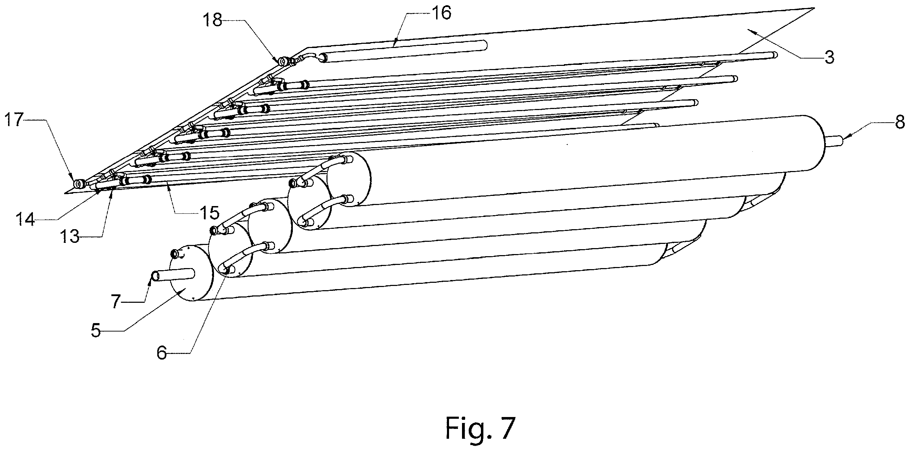

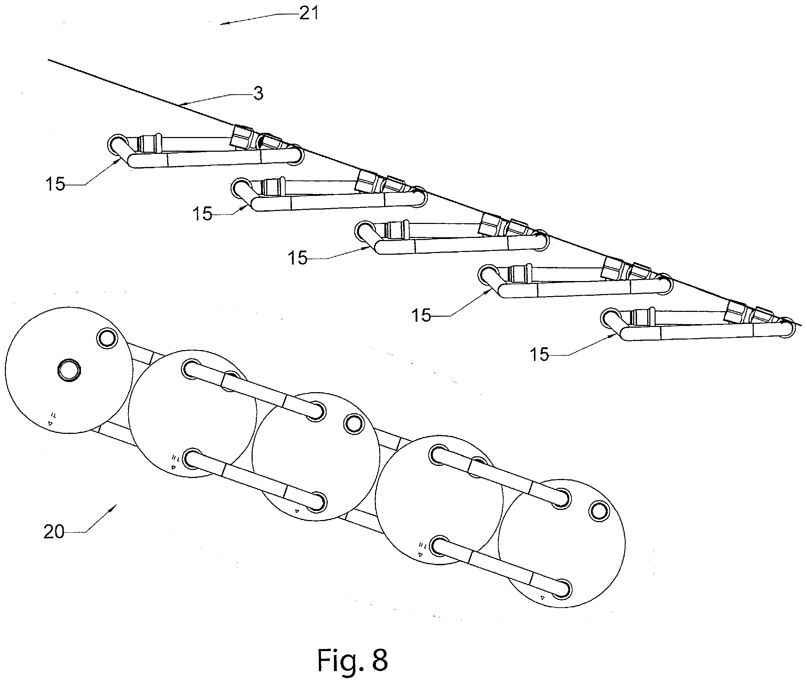

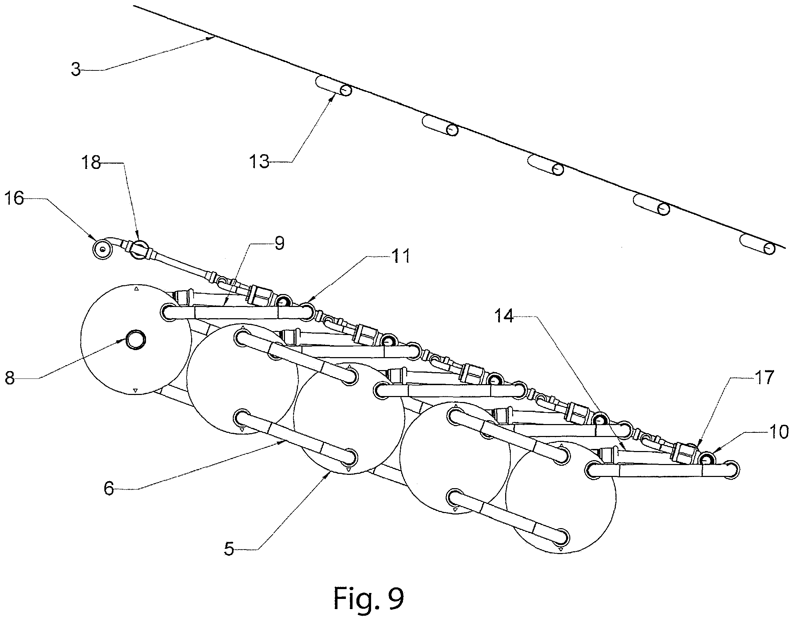

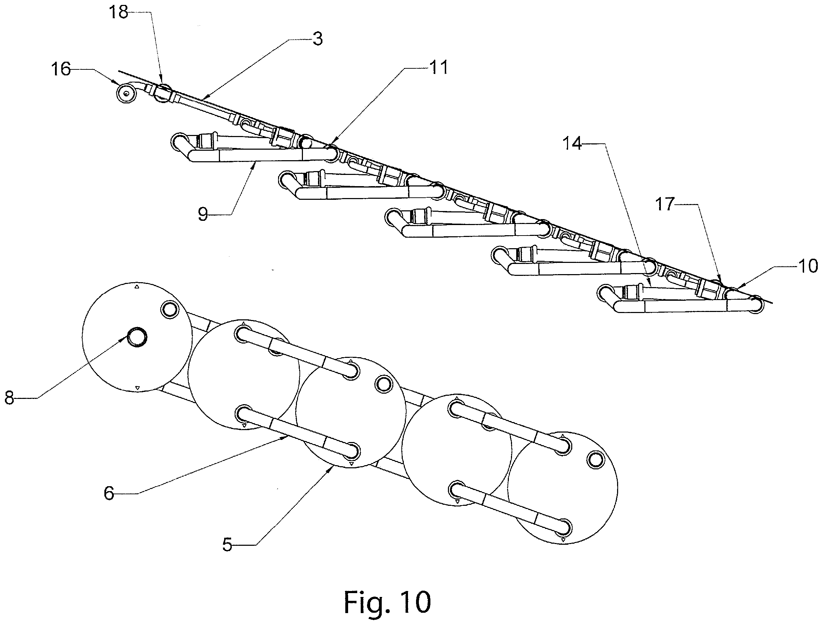

Making reference to figures 1 - 10 of the enclosed drawings, it is shown a preferred embodiment of a solar collector according to the invention, generically indicated by the numerical reference 100.

Collector 100 can be connected in series or in parallel with other solar collectors 100, to realize a system 300 of natural solar circulation collectors 100.

The natural circulation of a fluid present in a circuit is activated when it is inclined in such a way that in the portion most exposed to solar irradiation, particularly the absorber 3, the fluid, heating, decreases in density and tends to rise, and in the portion not exposed to irradiation, in particular the heat exchanger 15, the fluid, cooling, increases in density and tends to fall down.

This principle is at the basis of the operation of the solar collector according to the invention.

The position of the absorber, or absorbing strips, relative to the secondary accumulation 20, as well as the inclinations of the various primary circuit sections 21 have been selected in such a way as to ensure the natural circulation of the heat transfer fluid with the minimum slope to which the collector can be installed.

The term "absorber" means an element consisting of one or more absorbing surfaces exposed to solar irradiation or other heat source, made up of thermally conductive material (preferably copper, aluminum or other material) connected to vessels (ducts, chambers or other) wherein the fluid, or heat transfer fluid, can flow, to which the heat absorbed by the absorber is transferred.

Making reference to the single natural circulation collector 100, in the first embodiment, it provides a containment structure 1, a plurality of secondary fluid accumulation ducts 5, fluidised by the respective collectors or collectors 6, a plurality of ducts or passages 13 of the primary heat transfer fluid, which are part of an absorber 3 exposed to solar irradiation and in fluid communication by respective connections 10 and 11, at least one heat exchanger 15, in fluid communication with said connections 10 and 11, thus achieving the primary fluid circulation system 21, an expansion vessel 16 (not essential) connected directly to said primary heat transfer fluid circulation system, a transparent surface 2 superimposed on the primary and secondary circulation systems, and coupled with said containment element 1.

In the solar collector 100 there is provided an insulation 4, which may optionally consist of several layers of different insulating material, thermally insulating said secondary fluid storage ducts 5 and said at least one heat exchanger 15 and able to limit the thermal dispersion of the absorber 3.

Once assembled, the solar collector 100 according to the invention has, within the assembly consisting of said containment element 1 and absorber glass 2, all the elements constituting a natural circulation system, including secondary fluid accumulation (typically hot water) and the expansion system, with the advantages that will be described below. Openings 17 and 18 are connected to the primary circuit 21 so that the heat transfer fluid control can be carried out during the operation of the system.

After introducing the primary heat transfer fluid within the ducts 9, 10, 11, 13, 14, 15 and in the expansion vessel 16 of the primary heat transfer fluid circulation system 21, the secondary fluid is fed through the inlet opening 7.

The heat, irradiated through the transparent surface 2 and absorbed by the absorbing plate 3, heats the primary heat transfer fluid within the first ducts 13 passing through the first connecting elements 10 and 14, begins flowing within second duct 15, exchanging heat with the water contained within the accumulator 5.

Water, or other secondary fluid, begins to subtract heat captured by the absorber 3 through heat exchangers 15.

Thus, the primary heat transfer fluid, by cooling down, decreases its density and by circulating through the second connecting elements 9 and 11 returns to the absorber, thus starting again the thermal cycle.

The hot water extraction from the system is provided by the upper part of the circulation and accumulation circuit of the secondary fluid 20 through an outlet opening 8, the supply from the lower one occurring through the inlet opening 7.

The solution described provides a complete natural circulation system, integrated within the collector 100, with no visible and compact tank, and with surface dimension typical of a solar collector and a reduced thickness.

Further, by the solution described by the invention, it is possible to realize a system comprised of a plurality of natural circulation solar collectors made up of solar collectors 100, compact and without visible tanks, thus with a surface dimension typical of solar collectors and a reduced thickness.

The natural circulation system realized with the solution described in the above is absolutely modular, so that the single collectors 100 or 200 can be connected in series and in parallel and in both cases it is obtained a layered heating of the liquid inside the accumulation.

Moreover, the system according to the invention allows to be installed on a ground or recessed roof, thereby respecting the landscape constraints, particularly as a result of the absence of a visible tank and the possibility of being recessed.

By the solution according to the invention, a product with a much improved aesthetics is obtained with respect to the colletors with a tank mounted above the same collector or hidden behind it.

In the solution according to the invention, secondary fluid accumulation and heat exchangers are completely surrounded by insulating material, which limits the heat dispersion to the outside.

Furthermore, the relative position between capture and accumulation limits the risk of reverse circulation, preventing that, at low temperatures and without irradiation, the primary heat transfer fluid contained in the absorber during cooling, circulates in the heat exchanger thus subtracting heat, to the secondary fluid accumulation.

Still, the secondary fluid (water) is protected from the risk of ice formation without the need for any control and heating system (thermostat and resistance) and other energy sources.

From an operational point of view, with the system according to the invention there are higher performances with respect to direct irradiation compact systems due to a limited heat dispersion (fully insulated accumulation and minimum amount of fluid exposed to the outside) and a consequent minimal risk of ice formation.

The solution according to the invention can also be simply, quickly and safely installed, since only the secondary circuit must be connected, since the primary circuit is integrated and may already be filled.

Heat exchange occurs in the solution according to the invention, preferably in all storage vessels, so as to have a uniform temperature distribution within the entire volume.

In addition, the structure of the solar collector 100 enables the storage tanks to be connected to form a series of connected tanks exchanging energy each other.

It is provided an insulation, preferably but not necessarily unique for the accumulation, so that the heat dispersion is consequently limited. In the particular embodiment described above, the second portion 15 of the primary circuit extends inside all the ducts, chambers or other, so as to yield heat absorbed by the absorber 3 uniformly to the entire accumulation.

Further, the first portion 13 of the primary conduit extends across the surface of the upper absorber 3 to absorb a greater amount of solar irradiation.

Particularly, the absorber 3 and the first portion 13 of the primary circuit are preferably welded each other.

Thanks to the relative position of capture 13 and exchanger 15 inside the duct, a good natural circulation of the thermal fluid is obtained.

According to an aspect of the present disclosure not covered by the claims, it is provided a natural circulation solar system with for solar collector, said solar collector providing a box-like containment structure, closed above by a transparent surface, and further providing inside upper absorbing means, for the exposure to the solar radiation, arranged inferiorly with respect to said transparent surface, a series of independent accumulation primary circuits for the circulation therein of a primary heat carrier fluid, a series of secondary accumulation ducts for the natural circulation of a secondary fluid, and a series of heat exchangers for the exchange of heat between said primary heat carrier fluid and said secondary fluid, said natural circulation system being characterized in that said series of secondary ducts comprise at least an inlet opening and at least an outlet opening of said secondary fluid, said openings being reachable from the outside with respect to said box-like containment structure, in that said series of primary circuits comprise at least a first portion, thermally connected to said upper absorbing means, and at least a second portion thermally connected to said series of secondary ducts, in correspondence with said series of heat exchangers, and in that at least one layer of insulating material is provided between said series of ducts of said primary circuit and said series of ducts of said secondary fluid, and in that, when said primary heat carrier fluid flows by natural circulation in said series of primary circuits, said primary heat carrier fluid and said secondary fluid circulate in countercurrent in said heat exchanger.

The present invention has been described according to its preferred embodiments, but it is to be understood that variations and/or modifications may be introduced by those skilled in the art without departing from the scope as defined in the enclosed claims.

## Claims

1. Natural circulation solar system for solar collector, said solar collector providing a box-like containment structure (1), closed above by a transparent surface (2), and further providing inside upper absorbing means (3), for the exposure to the solar radiation, arranged inferiorly with respect to said transparent surface (2) and superimposed on a series of ducts (9, 10, 11, 13, 14, 15) of an independent accumulation primary circuit (21) for the natural circulation therein of a primary heat carrier fluid, on at least one secondary accumulation duct (5) of a secondary circuit (20) for the circulation of a secondary fluid, and on at least one heat exchanger for the exchange of heat between said primary heat carrier fluid and said secondary fluid, said secondary circuit (20) comprising at least an inlet opening (7) and at least an outlet opening (8) of said secondary fluid, said openings (7, 8) being reachable from the outside with respect to said box-like containment structure (1), wherein said series of ducts of the primary circuit (21) comprise at least a first portion (13), thermally connected to said upper absorbing means (3), and at least a second portion (15) thermally connected to said at least one secondary duct (5), in correspondence with said at least one heat exchanger (15), wherein at least one layer of insulating material (4) is provided between said series of ducts of said primary circuit (21) and said at least one secondary duct (5) of said secondary fluid thermally insulating said secondary ducts (5) and said at least one heat exchanger (15) and able to limit the thermal dispersion of the upper absorbing means (3), and wherein, when said primary heat carrier fluid flows by natural circulation in said series of primary ducts of said primary circuit (21), said primary heat carrier fluid and said secondary fluid circulate in countercurrent in said heat exchanger, said natural circulation solar system being **characterized in that** said first portion (13), arranged in correspondence of said upper absorbing means (3), is provided shifted along the horizontal plane with respect to said second portion (15), arranged in correspondence of the secondary accumulation circuit (20), so that, during use, when the upper absorbing means (3) are exposed to solar irradiation and when said system is inclined and said first portion (13) is in a lower position with respect to the second portion (15), natural circulation of the primary heat-carrier fluid is activated, wherein the fluid, heating in correspondence of the first portion (13), decreases in density and tends to rise in correspondence of the second portion (15), not exposed to solar irradiation, wherein the fluid, cooling, increases in density and tends to fall down returning to the first portion (13).

2. Natural circulation system according to claim 1, **characterized in that** said upper absorbing means (3) are comprised of a single upper absorbing means or by a series of strips of absorbing means.

3. Natural circulation system according to one of the preceding claims, **characterized in that** said at least one layer of insulating material (4) completely surrounds said series of secondary ducts (5).

4. Natural circulation system according to one of the preceding claims, **characterized in that** said upper absorbing means (3) are made up of thermally conductive material, preferably copper or aluminium.

5. Natural circulation system according to one of the preceding claims, **characterized in that** said secondary accumulation circuit provides a plurality of accumulation vessels (5) for the secondary fluid and for passage of the same, preferably tanks, ducts, rooms and like, and hydraulic connection means (6) between said accumulation vessels (5).

6. Natural circulation system according to one of the preceding claims 1 - 4, **characterized in that** said at least one secondary conduit is a single storage tank (20) of the secondary fluid and for the passage of the same.

7. Natural circulation system according to one of the preceding claims, **characterized in that** said second portion (15) of said series of ducts of said primary circuit (21) is inserted, at least partially, in said series of secondary ducts (5).

8. Natural circulation system according to one of the preceding claims, **characterized in that** said primary circuit (21) of the heat carrier fluid provides an integrated expansion system (16).

9. Natural circulation system according to claim 8, **characterized in that** said integrated expansion system (16) provides a series of connections located in the highest part of the primary circuit, so as to allow any air bubbles present inside said primary circuit to be conveyed into the expansion system (16).

10. Natural circulation system according to claim 8 or 9, **characterized in that** the ducts of the expansion connection circuit have a reduced passage with respect to the primary circuit, so that the natural circulation of heat carrier fluid is not disturbed.

11. Natural circulation system according to claim 1, **characterized in that** it is provided a further exchange between the secondary fluid and the sanitary circuit, in this case the secondary storage being a technical fluid accumulation in which it is immersed a heat exchanger extracting heat from the said secondary storage to yield it to the domestic water.

12. Natural circulation system according to any one of the preceding claims, **characterized in** providing a plurality of independent primary circuits (21) so to obtain a plurality of heat exchange areas with said secondary circuit (20).

13. Natural circulation system according to the preceding claim, when depends from claims 5 and 7, **characterized in that** the second portion (15) of the series of ducts of each independent primary circuit (21) is inserted, at least partially, in a respective storage vessel (5) of the secondary circuit (20).

14. Assembly of solar collectors, connected in series and/or in parallel, comprising a plurality of natural circulation systems or collectors as claimed in claims 1 - 13.

## Patentansprüche

1. Solarsystem mit natürlicher Zirkulation für einen Sonnenkollektor, wobei der Sonnenkollektor eine kastenartige Gehäusestruktur (1) vorsieht, die oben durch eine transparente Fläche (2) geschlossen ist und im Inneren weiterhin obere Absorptionsmittel (3) für die Exposition an die Sonnenstrahlung vorsieht, die in Bezug auf die transparente Fläche (2) unterhalb angeordnet sind und über einer Reihe von Kanälen (9, 10, 11, 13, 14, 15) eines unabhängigen primären Akkumulationskreislaufs (21) für die natürliche Zirkulation eines primären Wärmeträgerfluids darin, mindestens einem sekundären Akkumulationskanal (5) eines sekundären Kreislaufs (20) für die Zirkulation eines sekundären Fluids und mindestens einem Wärmetauscher für den Wärmeaustausch zwischen dem primären Wärmeträgerfluid und dem sekundären Fluid positioniert sind, wobei der sekundäre Kreislauf (20) zumindest eine Einlassöffnung (7) und zumindest eine Auslassöffnung (8) für das sekundäre Fluid umfasst, wobei die Öffnungen (7, 8) von der Außenseite in Bezug auf die kastenartige Gehäusestruktur (1) erreichbar sind,
wobei die Reihe von Kanälen des primären Kreislaufs (21) zumindest einen ersten Abschnitt (13), der mit den oberen Absorptionsmittel (3) thermisch verbunden ist, und zumindest einen zweiten Abschnitt (15) umfasst, der mit dem mindestens einen sekundären Kanal (5) thermisch verbunden ist, in Übereinstimmung mit dem mindestens einen Wärmetauscher (15),
wobei mindestens eine Schicht von Isoliermaterial (4) zwischen der Reihe von Kanälen des primären Kreislaufs (21) und dem mindestens einen sekundären Kanal (5) des sekundären Fluids vorgesehen ist, welche die sekundären Kanäle (5) und den mindestens einen Wärmetauscher (15) thermisch isoliert und dazu fähig ist, die thermische Dispersion der oberen Absorptionsmittel (3) zu begrenzen,
und wobei, wenn das primäre Wärmeträgerfluid durch natürliche Zirkulation in der Reihe von primären Kanälen des primären Kreislaufs (21) fließt, das primäre Wärmeträgerfluid und das sekundäre Fluid gegenläufig in dem Wärmetauscher zirkulieren, wobei das Solarsystem mit natürlicher Zirkulation **dadurch gekennzeichnet ist, dass** der erste Abschnitt (13), der in Übereinstimmung mit den oberen Absorptionsmitten (3) angeordnet ist, in Bezug auf den zweiten Abschnitt (15), der in Übereinstimmung mit dem sekundären Akkumulationskreislauf (20) angeordnet ist, entlang der horizontalen Ebene verschoben vorgesehen ist, sodass im Gebrauch, wenn die oberen Absorptionsmittel (3) einer Sonnenbestrahlung ausgesetzt sind und wenn das System geneigt ist und sich der erste Abschnitt (13) in Bezug auf den zweiten Abschnitt (15) an einer unteren Position befindet, die natürliche Zirkulation des primären Wärmeträgerfluids aktiviert wird, wobei das Fluid, das sich in Übereinstimmung mit dem ersten Abschnitt (13) erwärmt, an Dichte abnimmt und dazu tendiert, in Übereinstimmung mit dem zweiten Abschnitt (15) anzusteigen, der keiner Sonnenbestrahlung ausgesetzt ist, wobei das Fluid, wenn es sich abkühlt, an Dichte zunimmt und dazu tendiert, zu sinken, wenn es in den ersten Abschnitt (13) zurückkehrt.

2. System mit natürlicher Zirkulation nach Anspruch 1, **dadurch gekennzeichnet, dass** die oberen Absorptionsmittel (3) aus einem einzelnen oberen Absorptionsmittel oder einer Reihe von Leisten von Absorptionsmitteln gebildet sind.

3. System mit natürlicher Zirkulation nach einem der vorstehenden Ansprüche, **dadurch gekennzeichnet, dass** die mindestens eine Schicht von Isoliermaterial (4) die Reihe von sekundären Kanälen (5) vollständig umgibt.

4. System mit natürlicher Zirkulation nach einem der vorstehenden Ansprüche, **dadurch gekennzeichnet, dass** die oberen Absorptionsmittel (3) aus wärmeleitendem Material bestehen, vorzugsweise Kupfer oder Aluminium.

5. System mit natürlicher Zirkulation nach einem der vorstehenden Ansprüche, **dadurch gekennzeichnet, dass** der sekundäre Akkumulationskreislauf eine Mehrzahl von Akkumulationsbehältern (5) für das sekundäre Fluid und für den Durchlauf desselben vorsieht, vorzugsweise Tanks, Kanäle, Räume und dergleichen, und hydraulische Verbindungsmittel (6) zwischen den Akkumulationsbehältern (5).

6. System mit natürlicher Zirkulation nach einem der vorstehenden Ansprüche 1-4, **dadurch gekennzeichnet, dass** die mindestens eine sekundäre Leitung ein einzelner Speichertank (20) des sekundären Fluids und für den Durchlauf desselben ist.

7. System mit natürlicher Zirkulation nach einem der vorstehenden Ansprüche, **dadurch gekennzeichnet, dass** der zweite Abschnitt (15) der Reihe von Kanälen des primären Kreislaufs (21) zumindest teilweise in die Reihe von sekundären Kanälen (5) eingeführt ist.

8. System mit natürlicher Zirkulation nach einem der vorstehenden Ansprüche, **dadurch gekennzeichnet, dass** der primäre Kreislauf (21) des Wärmeträgerfluids ein integriertes Expansionssystem (16) vorsieht.

9. System mit natürlicher Zirkulation nach Anspruch 8, **dadurch gekennzeichnet, dass** das integrierte Expansionssystem (16) eine Reihe von Verbindungen vorsieht, die sich in dem höchsten Teil des primären Kreislaufs befinden, um es zu ermöglichen, dass alle in dem primären Kreislauf vorhandenen Luftblasen in das Expansionssystem (16) befördert werden.

10. System mit natürlicher Zirkulation nach Anspruch 8 oder 9, **dadurch gekennzeichnet, dass** die Kanäle des Expansionsverbindungskreislaufs einen verringerten Durchlauf in Bezug auf den primären Kreislauf aufweisen, sodass die natürliche Zirkulation des Wärmeträgerfluids nicht gestört wird.

11. System mit natürlicher Zirkulation nach Anspruch 1, **dadurch gekennzeichnet, dass** ein weiterer Austausch zwischen dem sekundären Fluid und dem Sanitärkreislauf vorgesehen ist, wobei in diesem Fall der sekundäre Speicher eine technische Fluidansammlung ist, in die ein Wärmetauscher eingetaucht ist, der dem sekundären Speicher Wärme entzieht, um sie dem Brauchwasser bereitzustellen.

12. System mit natürlicher Zirkulation nach einem der vorstehenden Ansprüche, **dadurch gekennzeichnet, dass** eine Mehrzahl von unabhängigen primären Kreisläufen (21) vorgesehen ist, um eine Mehrzahl von Wärmeaustauschbereichen mit dem sekundären Kreislauf (20) zu erhalten.

13. System mit natürlicher Zirkulation nach dem vorstehenden Anspruch, wenn von Anspruch 5 und 7 abhängig, **dadurch gekennzeichnet, dass** der zweite Abschnitt (15) der Reihe von Kanälen jedes unabhängigen primären Kreislaufs (21) zumindest teilweise in einen jeweiligen Speicherbehälter (5) des sekundären Kreislaufs (20) eingeführt ist.

14. Anordnung von Sonnenkollektoren, angeordnet in Reihe und/oder parallel, umfassend eine Mehrzahl von Systemen mit natürlicher Zirkulation oder Kollektoren nach Anspruch 1-13.

## Revendications

1. Système solaire à circulation naturelle pour capteur solaire, ledit capteur solaire fournissant une structure de confinement en forme de boîte (1), fermée au-dessus par une surface transparente (2), et fournissant en outre à l'intérieur des moyens d'absorption supérieurs (3), pour l'exposition au rayonnement solaire, disposés de manière inférieure par rapport à ladite surface transparente (2) et superposés à une série de conduits (9, 10, 11, 13, 14, 15) d'un circuit primaire d'accumulation indépendant (21) pour la circulation naturelle dans celui-ci d'un fluide caloporteur primaire, à au moins un conduit d'accumulation secondaire (5) d'un circuit secondaire (20) pour la circulation d'un fluide secondaire, et à au moins un échangeur de chaleur pour l'échange de chaleur entre ledit fluide caloporteur primaire et ledit fluide secondaire, ledit circuit secondaire (20) comprenant au moins une ouverture d'entrée (7) et au moins une ouverture de sortie (8) dudit fluide secondaire, lesdites ouvertures (7, 8) étant atteignables depuis l'extérieur par rapport à ladite structure de confinement en forme de boîte (1), dans lequel
ladite série de conduits du circuit primaire (21) comprend au moins une première partie (13), reliée thermiquement auxdits moyens d'absorption supérieurs (3), et au moins une seconde partie (15) reliée thermiquement audit au moins un conduit secondaire (5), en correspondance avec ledit au moins un échangeur de chaleur (15), dans lequel
au moins une couche de matériau isolant (4) est prévue entre ladite série de conduits dudit circuit primaire (21) et ledit au moins un conduit secondaire (5) dudit fluide secondaire isolant thermiquement lesdits conduits secondaires (5) et ledit au moins un échangeur de chaleur (15) et apte à limiter la dispersion thermique des moyens d'absorption supérieurs (3), et dans lequel,
lorsque ledit fluide caloporteur primaire s'écoule par circulation naturelle dans ladite série de conduits primaires dudit circuit primaire (21), ledit fluide caloporteur primaire et ledit fluide secondaire circulent à contre-courant dans ledit échangeur de chaleur, ledit système solaire à circulation naturelle étant **caractérisé en ce que** ladite première partie (13), disposée en correspondance desdits moyens d'absorption supérieurs (3), est prévue de sorte à être décalée le long du plan horizontal par rapport à ladite seconde partie (15), disposée en correspondance du circuit d'accumulation secondaire (20), de sorte que, pendant l'utilisation, lorsque les moyens d'absorption supérieurs (3) sont exposés à du rayonnement solaire et lorsque ledit système est incliné et ladite première partie (13) est dans une position inférieure par rapport à la seconde partie (15), une circulation naturelle du fluide caloporteur primaire est activée, dans lequel le fluide, se chauffant en correspondance de la première partie (13), diminue en densité et tend à s'élever en correspondance de la seconde partie (15), non exposée à du rayonnement solaire, dans lequel le fluide, se refroidissant, augmente en densité et tend à redescendre en retournant vers la première partie (13).

2. Système à circulation naturelle selon la revendication 1, **caractérisé en ce que** lesdits moyens d'absorption supérieurs (3) sont constitués d'un unique moyen d'absorption supérieur ou par une série de bandes de moyens d'absorption.

3. Système à circulation naturelle selon l'une des revendications précédentes, **caractérisé en ce que** ladite au moins une couche de matériau isolant (4) entoure complètement ladite série de conduits secondaires (5).

4. Système à circulation naturelle selon l'une des revendications précédentes, **caractérisé en ce que** lesdits moyens d'absorption supérieurs (3) sont constitués de matériau thermiquement conducteur, de préférence du cuivre ou de l'aluminium.

5. Système à circulation naturelle selon l'une des revendications précédentes, **caractérisé en ce que** ledit circuit d'accumulation secondaire fournit une pluralité de récipients d'accumulation (5) pour le fluide secondaire et pour le passage de celui-ci, de préférence des réservoirs, des conduits, des espaces libres et similaires, et des moyens de connexion hydraulique (6) entre lesdits récipients d'accumulation (5).

6. Système à circulation naturelle selon l'une des revendications précédentes 1-4, **caractérisé en ce que** ledit au moins un conduit secondaire est un unique réservoir de stockage (20) du fluide secondaire et pour le passage de celui-ci.

7. Système à circulation naturelle selon l'une des revendications précédentes, **caractérisé en ce que** ladite seconde partie (15) de ladite série de conduits dudit circuit primaire (21) est insérée, au moins partiellement, dans ladite série de conduits secondaires (5).

8. Système à circulation naturelle selon l'une des revendications précédentes, **caractérisé en ce que** ledit circuit primaire (21) du fluide caloporteur fournit un système à détente intégrée (16).

9. Système à circulation naturelle selon la revendication 8, **caractérisé en ce que** ledit système à détente intégrée (16) fournit une série de connexions situées dans la partie la plus élevée du circuit primaire, de manière à permettre à toute bulle d'air présente à l'intérieur dudit circuit primaire d'être acheminée dans le système à détente (16).

10. Système à circulation naturelle selon la revendication 8 ou 9, **caractérisé en ce que** les conduits du circuit de connexion à détente présentent un passage réduit par rapport au circuit primaire, de sorte que la circulation naturelle de fluide caloporteur n'est pas perturbée.

11. Système à circulation naturelle selon la revendication 1, **caractérisé en ce qu'**il est prévu un échange supplémentaire entre le fluide secondaire et le circuit sanitaire, le stockage secondaire étant dans ce cas une accumulation de fluide technique dans lequel est immergé un échangeur de chaleur extrayant de la chaleur dudit stockage secondaire pour la restituer à l'eau domestique.

12. Système à circulation naturelle selon l'une quelconque des revendications précédentes, **caractérisé par** fournir une pluralité de circuits primaires indépendants (21) de manière à obtenir une pluralité de zones d'échange de chaleur avec ledit circuit secondaire (20).

13. Système à circulation naturelle selon la revendication précédente, lorsqu'elle dépend des revendications 5 et 7, **caractérisé en ce que** la seconde partie (15) de la série de conduits de chaque circuit primaire indépendant (21) est insérée, au moins partiellement, dans un récipient de stockage respectif (5) du circuit secondaire (20).

14. Ensemble de capteurs solaires, reliés en série et/ou en parallèle, comprenant une pluralité de systèmes ou de capteurs à circulation naturelle tels que revendiqués dans les revendications 1-13.
